# EUROPEAN PATENT SPECIFICATION

(11) **EP 2 331 390 B1**
(45) Date of publication and mention of the grant of the patent: **11.02.2015**
(21) Application number: 09810950.7
(22) Date of filing: 04.09.2009
(51) Int. Cl.: B62K 19/32, B62K 21/06

(54) **ADJUSTABLE CYCLE STEERING HEADSET**
EINSTELLBARER FAHRRADLENKKOPF
JEU DE DIRECTION DE VÉLO RÉGLABLE

(30) Priority: 04.09.2008 US 136424 P
(43) Date of publication of application: 15.06.2011
(73) Proprietor: Cycles Argon-18 Inc., Montréal, Québec H3N 2C7 (CA)
(72) Inventor: RIOUX, Gervais, Lachine Québec H8T 3L2 (CA); CANTIN, Gilles, Grand-Mère Québec G9T 5K4 (CA)
(74) Representative: Lahrtz, Fritz
(86) International application number: PCT/CA2009/001208
(87) International publication number: WO 2010/025544

(56) References cited:
- GB-A- 2 413 996
- US-A- 5 387 255
- US-A- 5 496 126
- US-A- 5 813 769
- US-A- 5 964 474
- US-A1- 2003 121 357
- US-A1- 2007 210 554
- US-A1- 2009 134 598
- US-B1- 6 231 063
- US-B1- 6 497 425

## Description

### CROSS REFERENCE TO RELATED APPLICATIONS

This Application claims priority on U.S. Provisional Application No. 61/136,424, filed on September 4, 2008.

### FIELD OF THE INVENTION

The present invention generally relates to an adjustable steering headset for a bicycle. More specifically, the present invention is concerned with a bearing cup for setting a distance between a bicycle head tube and an upper headset bearing.

### BACKGROUND OF THE INVENTION

Typically, a bicycle headset assembly comprises an upper and a lower bearing allowing pivotal movement of the bicycle steering about a head tube commonly disposed on the front portion of a bicycle frame. The bicycle steering includes a fork tube that extends from a bicycle fork all the way through the head tube and extends above the headset to receive handlebars thereon. The headset assembly is secured to the head tube by the fork tube.

The upper and lower bearings that are located in the bicycle headset are respectively disposed on each end of the head tube (e.g. on the top and on the bottom portions of the head tube of a bicycle in normal operating position). Mechanical stress from the bicycle fork is transmitted by the bearings of the headset assembly to the bicycle frame while allowing rotational movements of the fork about the frame.

The height of the handlebars has a significant effect on the rider's position on the bicycle. An aggressive driver will likely desire to have a low riding position as opposed to a less aggressive driver who appreciates to have a higher position on the bicycle. The position of the handlebars in respect to the headset can be slightly adjusted to accommodate a range of driving positions.

Tall bicycle riders will commonly adjust the height of the handlebars slightly higher than shorter riders. The desired distance between the handlebars and the headset is commonly provided by a series of spacers disposed on the fork tube between the handlebars and the headset. Higher handlebars increase the distance from the headset thus increasing the lever effect on the headset's bearings. The higher the handlebars are from the upper bearing, the higher will be the load transmitted from the handlebars to the upper bearing. The deflections of the steering and the fork tube, therefore the load applied to the upper bearing in the headset assembly, have a significant impact on the performance of the bicycle.

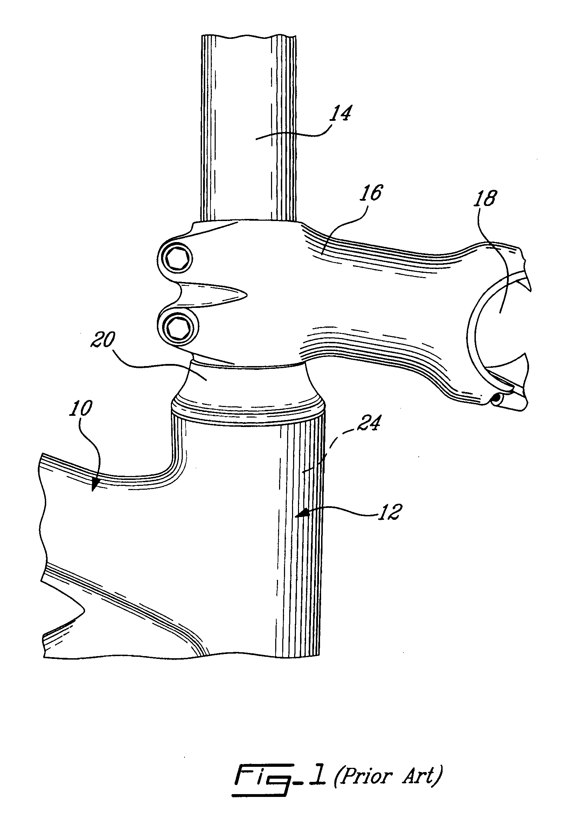

Figures 1 through 6 depict a conventional bicycle headset assembly. Referring more precisely to Figure 1, where is illustrated a bicycle frame 10 with a head tube 12, one can appreciate that handlebars (not illustrated on the figures) are secured to the fork tube 14 via handlebars connector 16. The handlebar connector 16 defines an opening 18 adapted to receive the handlebars. The fork tube 14 is rotatably secured to the frame 10 through the head tube 12 to steer the bicycle. Bearings 24 are disposed on each end of the head tube 12 to reduce rotational friction between the fork tube 14 and the head tube 12. The fork tube 14 on Figure 1 has not been cut to the proper length and is shown extending above the upper portion of the handlebars connector 16. A bearing cover 20 is installed on top of the head tube 12 to prevent any foreign material from getting inside the head tube 12 and contaminating the bearings 24.

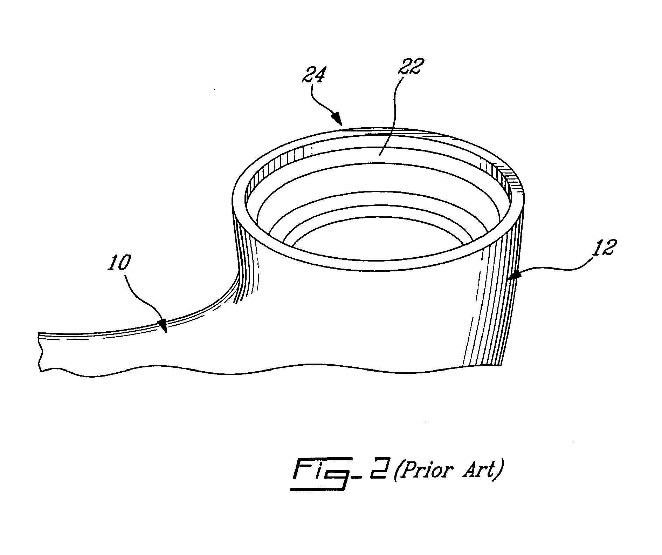

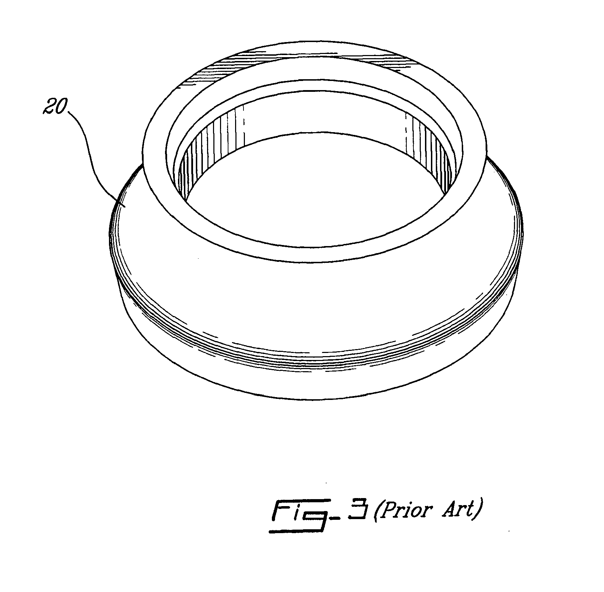

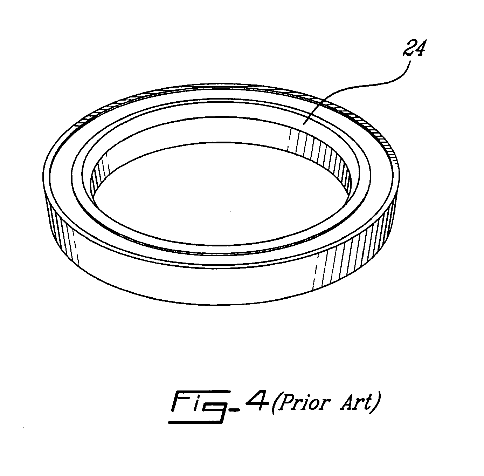

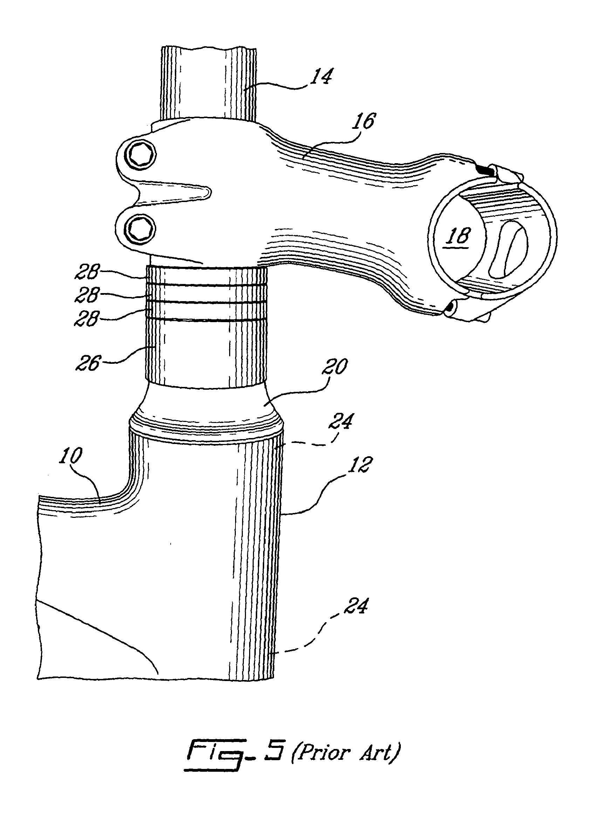

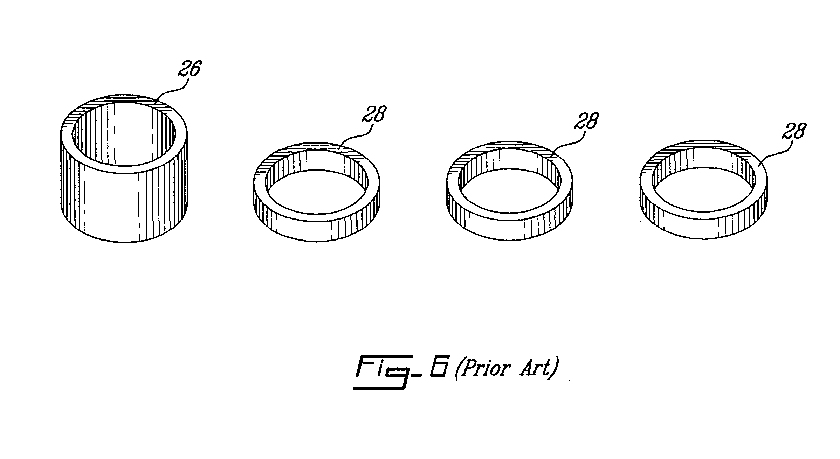

Figure 2 is a magnified view of the top end of the head tube 12 of Figure 1 with the fork tube 14 and the bearing cover 20 removed. A bearing receiving portion 22 (annular cavity) is defined inside the upper portion of the head tube 12. Figure 3 is a magnified view of the bearing cover 20 removed from the assembly. Figure 4 is a magnified view of the bearing 24 removed from the head tube 12. Figure 5 illustrates a steering assembly of a bicycle with a handlebar connector 16 elevated with respect to the bearing cover 20. A series of cylindrical spacers 26, 28 are disposed between the upper portion of the head tube 12 and the handlebar connector 16. As it can be appreciated on Figure 6, spacers 26, 28, of various thicknesses or heights (e.g. the spacer 26 is substantially thicker than spacer 28), are available to set most accurately the height of the handlebar connector 16.

Therefore, a need has been felt for an improved head tube assembly that reduces the stress applied on the upper bearing of the headset. A need also exists for a simple and inexpensive handlebar height adjustment mechanism.

### SUMMARY OF THE INVENTION

In accordance with one aspect of the present invention, there is provided a novel bearing support for a bicycle headset.

The present invention provides a headset bearing adjustment mechanism adapted to distance an upper bearing in a bicycle headset from the top portion of a bicycle head tube.

The present invention provides a bearing headset adjustment mechanism securing spacer(s) between the upper bearing of the headset and the top portion of the head tube.

One aspect of the present invention provides a headset arrangement adapted to receive a first bearing contacting the fork tube at a first distance and adapted to receive a bearing holder adapted to receive a second bearing contacting the fork tube at a second distance.

An aspect of the present invention provides a headset adapted to receive a bearing having a first diameter or a intervening bearing support, the intervening bearing support being adapted to receive a bearing having a second diameter smaller than the first diameter, the intervening support being also adapted to be fastened to the headset to distance the second bearing from the headset.

Therefore, in accordance with the present invention, there is provided a bearing holder for a headset used in conjunction with a head tube of a bicycle, comprising upper and lower ends, the upper end being adapted to receive a bearing, the lower end being adapted to be removably secured to the head tube of the bicycle, wherein the height of the bearing holder elevates the bearing with respect to the head tube, whereby the height of the bearing holder can be selected so that a handlebar connector mounted above the bearing holder to a fork tube rotatably mounted to the head tube positions handlebars mounted to the handlebar connector to a rider's liking.

Also in accordance with the present invention, there is provided a bearing holder used in conjunction with a head tube of a bicycle, comprising a first side adapted to receive a bearing, and a second side, opposed to the first side, adapted to be removably secured to a head tube of a bicycle, the bearing holder being selected so as to axially position the bearing at a desired elevation with respect to the head tube.

Further in accordance with the present invention, there is provided a bicycle headset adapted to receive a bearing having a first diameter or an intervening bearing support, the intervening bearing support being adapted to receive a bearing having a second diameter smaller than the first diameter, the intervening support being also adapted to be fastened to the headset to distance the second bearing from the headset.

The invention is defined in independent claims 1 and 8. Advantageous features are set out in dependent claims 2-7 and 9-12.

The foregoing and other objects, advantages and features of the present invention will become more apparent upon reading of the following non-restrictive description of an illustrative embodiment thereof, given by way of example only, with reference to the accompanying drawings.

### BRIEF DESCRIPTION OF THE DRAWINGS

In the appended drawings:
Figure 1 is a side elevational view of a conventional height adjustable bicycle headset;
Figure 2 is a perspective view of a top portion of a conventional head tube;
Figure 3 is a perspective view of a conventional bearing cover;
Figure 4 is a perspective view of a conventional bearing;
Figure 5 is a side elevational view of a conventional steering assembly with several spacers elevating the handlebar connector above the bearing cover;
Figure 6 is a perspective view of conventional spacers of various thicknesses (heights);
Figure 7 is a side sectional elevational view of a steering assembly in accordance with an embodiment of the present invention;
Figure 8 is an exploded perspective view of the steering assembly of Figure 7;
Figure 9 is an exploded side elevational view of the steering assembly of Figure 7;
Figure 10 is a top plan view of a bearing holder;
Figure 11 is a sectional elevational view of the bearing holder of Figure 10;
Figure 12 is a top plan view of a spacer;
Figure 13 is a sectional elevational view of the spacer of Figure 12;
Figure 14 is a top plan view of an insert;
Figure 15 is a sectional elevational view of the insert of Figure 14;
Figure 16 is a top plan view of a top headset assembly;
Figure 17 is a sectional elevational view of the top headset assembly of Figure 16;
Figure 18 is a sectional elevational view of a bottom headset assembly;
Figure 19 is a sectional elevational view of an alternate top headset assembly;
Figure 20 is a sectional elevational view of an alternate top headset assembly;
Figure 21 is a sectional elevational view of an alternate top headset assembly of the one shown in Figure 7;
Figure 22 is a sectional elevational view of an alternate top headset assembly of the one shown in Figure 7;
Figure 23 is an exploded view of a pair of components of an alternate top headset assembly of the one shown in Figure 7;
Figure 24 is a sectional elevational view of an alternate top headset assembly of the one shown in Figure 7;
Figure 25 is a top plan view of an alternate spacer of that shown in Figure 20; and
Figure 26 is a sectional elevational view of the alternate spacer of Figure 25 shown installed in the top headset assembly of Figure 20.

### DETAILED DESCRIPTION OF THE INVENTION

A bicycle headset adapted to receive an upper bearing, in accordance with a non-restrictive illustrative embodiment of the present invention, will now be described.

The headset is the set of components on a bicycle which provide a rotatable interface between the bicycle fork and the bicycle frame itself. The short tube through which the fork tube of the fork passes is called the head tube. A typical headset consists of two cups which are pressed into the top and bottom of the head tu be. Inside the two cups are bearings which provide a low friction contact between the bearing cup and the fork tube.

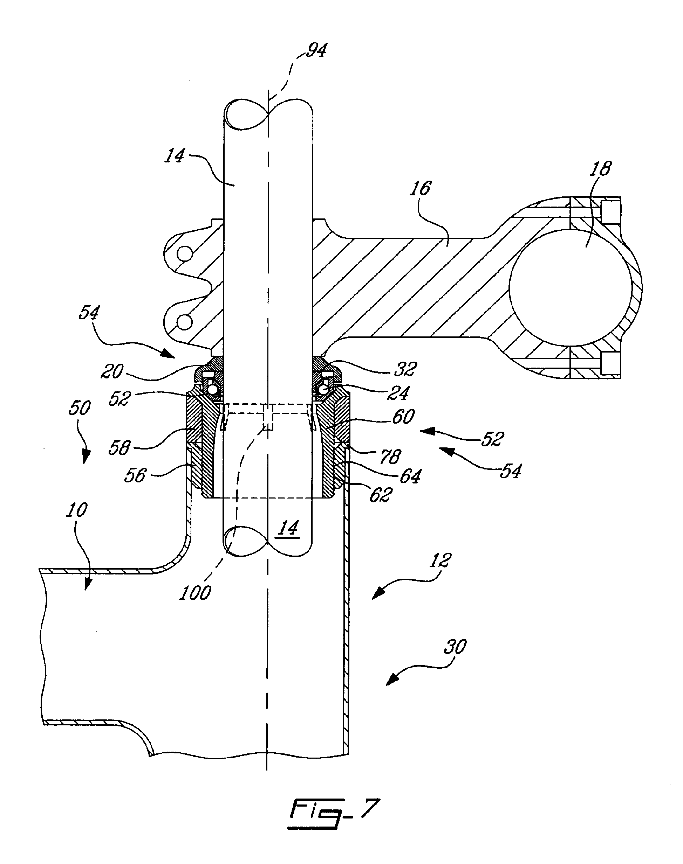

Referring to Figure 7, a bicycle 50 comprises a head tube 12 adapted to receive a fork 30 to support a front wheel (not shown) to steer the bicycle 50 about a head tube axis 94. A bicycle steering assembly has a bearing 24 disposed at a distance above the top portion of the head tube 12. The fork 30 provides a fork tube 14 that is adapted to be secured through the head tube 12 of the bicycle 50. A mechanism commonly called a headset 54 is disposed between the fork tube 14 and the head tube 12 to provide rotational movement of the fork tube 14 in respect to the head tube 12. The headset 54 includes a bearing cup 52 adapted to receive a bearing 24 providing rotational capability to the fork tube 14 about the head tube 12.

Still referring to Figure 7, the headset 54 also comprises an insert 56, a spacer 58 and a bearing holder 60. The insert 56 is secured to the head tube 12 with glue or welded if the material of the insert 56 is compatible with the material of the head tube 12. Alternatively, threads could be directly manufactured on the inside surface of the head tube 12 that is made of a material strong enough (e.g. steel or aluminum) to bear the loads coming from the handlebars without requiring any intervening parts. With the latter mechanical layout there is no need to have a distinct insert 56 because the threads are already made in the head tube 12.

Internal treads 62 are provided on the internal bore of the insert 56 to receive the associated external treads 64 of the bearing holder 60. In the present embodiment the bearing holder 60 is adapted to be screwed to the insert 56 to secure the spacer 58 therebetween.

Upon assembly, the spacer 58 is interposed between the insert 56 and the bearing holder 60 to set the distance of the upper bearing 24 about the top portion of the head tube 12. The increased distance of the bearing 24 above the head tube 12 reduces the distance between the handlebar connector 16 and the bearing 24 thus reducing the lever effect and the mechanical load transmitted to the upper bearing 24 by the handlebar connector 16.

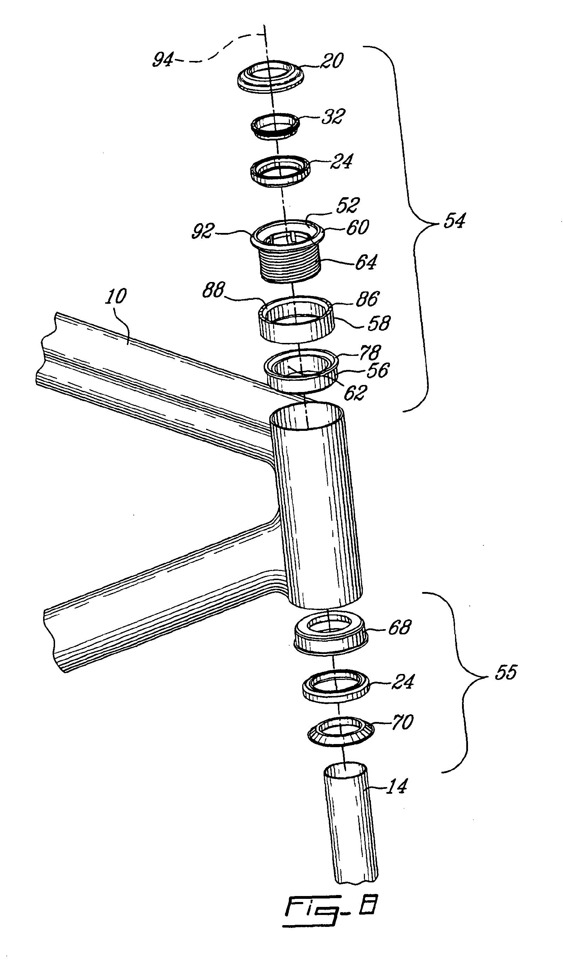

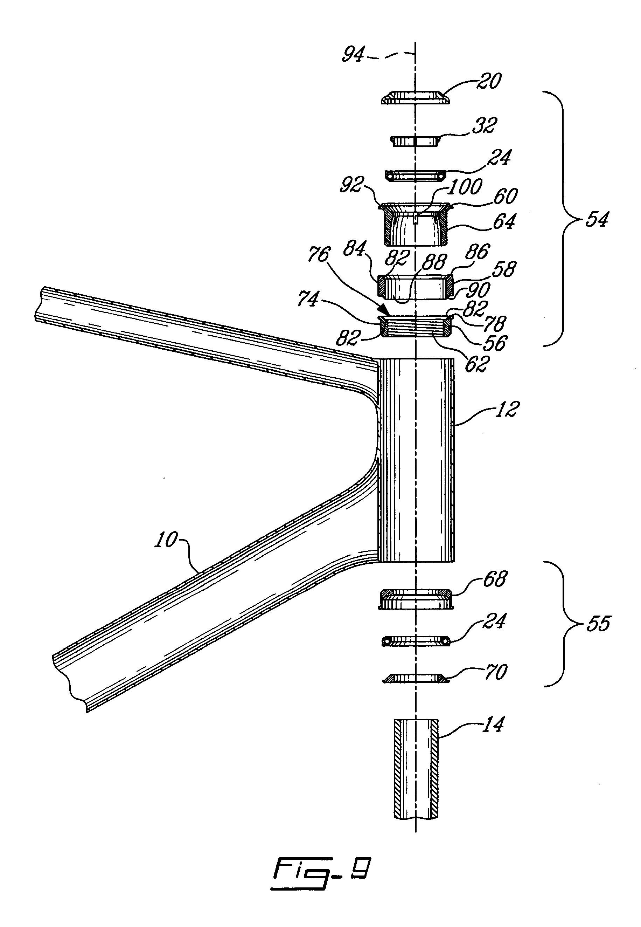

As appreciated from Figures 8 and 9, both depicting an exploded view of the headset assembly of Figure 7, the head set assembly 54 comprises a series of parts secured together. Starting from the top, the bearing cover 20 comes first, followed by a centering member 32 and the upper bearing 24. The centering member 32 is adapted to be fit inside the upper bearing 24 to help center the fork tube 14 and distribute evenly the load applied to the bearing 24. The upper bearing 24 sits in a bearing cup 52 provided in the bearing holder 60. The spacer 58 is disposed around the bearing holder 60 to distance the bearing cup 52 from the head tube 12. The bearing holder 60 also centers the spacer 58 about the head tube axis 94. The insert 56, secured to the head tube 12, receives the bearing holder's 60 cooperating external treads 64.

On the head tube 12 is found a lower headset 55 including a lower insert portion 68 adapted to receive another bearing 24 and a profiled washer 70. A lower insert portion 68 is secured in a lower portion of the head tube 12 in a fashion similar to the other side of the head tube 12. Upon assembly, the bearing 24 is positioned in the lower bearing holder portion 68. All these parts are held together by the fork tube 14 passing through the head tube 12 along the head tube axis 94. The fork tube 14, once secured inside the head tube 12, also axially constricts the top and bottom bearing 24 arrangements by compressing all the parts together along the head tube axis 94. Both bearings 24 are pushed toward each other.

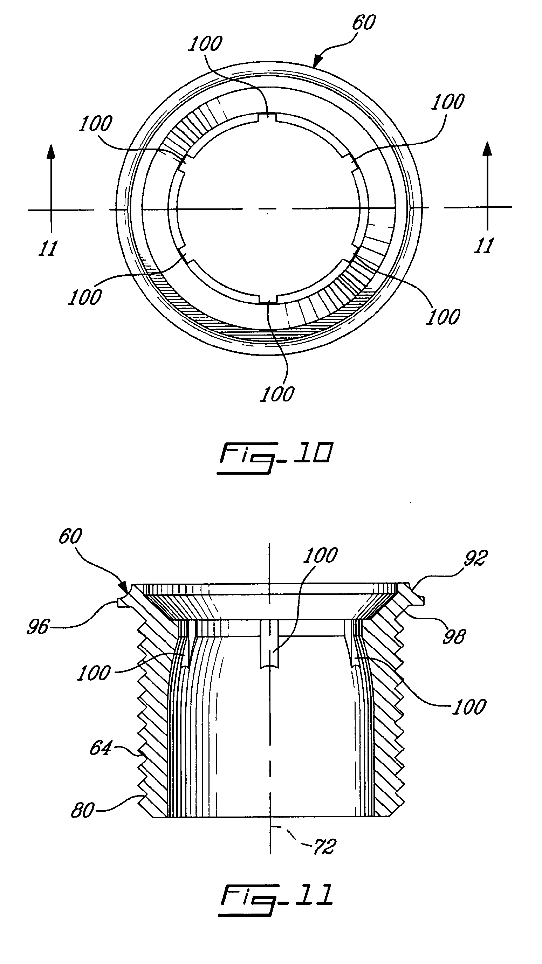

Referring now to Figures 10 and 11, the bearing holder 60 has an annular shape (hollowed center) and comprises an annular wall 80 having a threaded external surface 64 complementary to the internal threaded surface 62 of the insert 56. The annular wall 80 defines a bore along an axis 72 adapted to be concentric with the head tube axis 94 once assembled. A spacer stopper 96 diametrically extending from the external treads 64 is adapted to abut one side of the spacer 58. The spacer stopper 96 further defines an inclined portion 98, complementary with the inclined portion 98 of the spacer 58, to concentrically position the spacer 58 with the bearing holder 60. In contrast, when the spacer 58 is not used in cooperation with the bearing holder 60, the inclined portion 98 on the spacer stopper 96 of the bearing holder 60 is complementary with the inclined portion 98 of the insert 56 for the same reason as described above. An arched annular surface 92 is also disposed on the upper side of the spacer stopper 96 to mate with the bearing cover 20.

The bearing holder 60 is secured into place using splines 100 disposed on the inside wall of the bearing holder 60. The use of a tool adapted to engage the splines 100 will allow to screw and secure the bearing holder 60 with its associated treads 62 formed in the insert 56 and prevents damaging the exterior finish of the bearing holder 60.

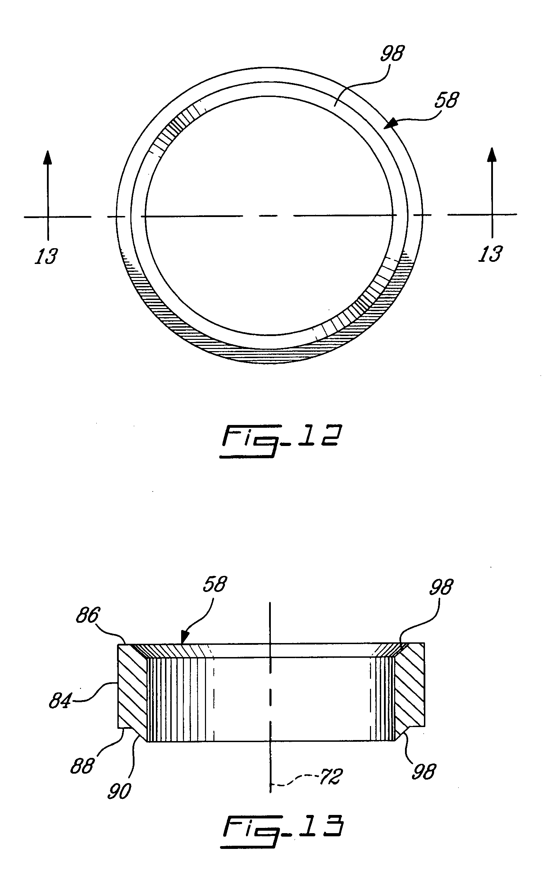

The spacer 58, illustrated in Figures 12 and Figures 13, is annular-shaped and comprises an annular wall 84 having a plain external surface and a plain internal surface. The annular wall 84 defines a bore. The spacer 58 comprises an annular top portion 86 and an annular bottom portion 88. The annular top portion 86 includes a concave inclined portion 98 and the annular bottom portion 88 includes a corresponding convex inclined portion 98. The inclined portions 98 are adapted to mate with respective inclined portions 98 provided on the bearing holder 60 and/or the insert 56. The inclined portions 98 ensure proper concentrical alignment between the parts and about the axis 72 adapted to be concentric with the head tube axis 94 once assembled.

The spacer 58 can be manufactured with different heights to allow a rider to choose a desired height of the handlebar connector 16. Combining many spacers 58 to obtain a precise height of the handlebar connector 16 is also encompassed by the scope of the present invention. The inclined portion 98 on the bottom portion of a spacer 58 mates with the inclined portion 98 on the top portion of the juxtaposed spacer 58 to ensure alignment and stability between the spacers 58 when using more than one spacer 58. Conversely, not having recourse to the spacer 58 in the bearing cup assembly 54 enables the handlebar connector 16 to be mounted to the bicycle in the lowest position.

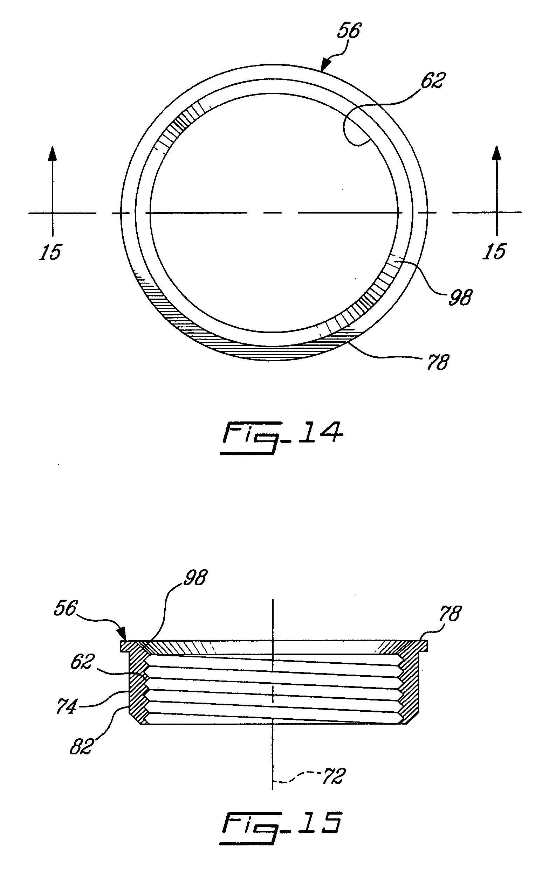

The insert 56, as best seen in Figures 14 and 15, is annular-shaped and comprises an annular wall 82 having a plain external surface 74 and a threaded internal surface 62. The insert 56 also comprises an external annular flange 78 radially extending from the external surface 74. The top surface of the insert 56 includes an inclined portion 98 adapted to mate with corresponding inclined portions disposed on the bearing holder 60 and the spacer 58. Again, the spacer 58 is optional such that the bearing holder 60 can be fastened directly to the insert 56 without the spacer 58 being interposed therebetween.

The plain external surface 7 4 of the insert 56 is pressed, glued or secured in another way into an upper portion of the head tube 12. It is to be noted that the flange 78 remains outside of the head tube 12 and overlyingly abuts the upper portion of the head tube 12. The spacer 58 is mounted to the insert 56 and the bearing holder 60 is mounted to the spacer 58 as described hereinabove.

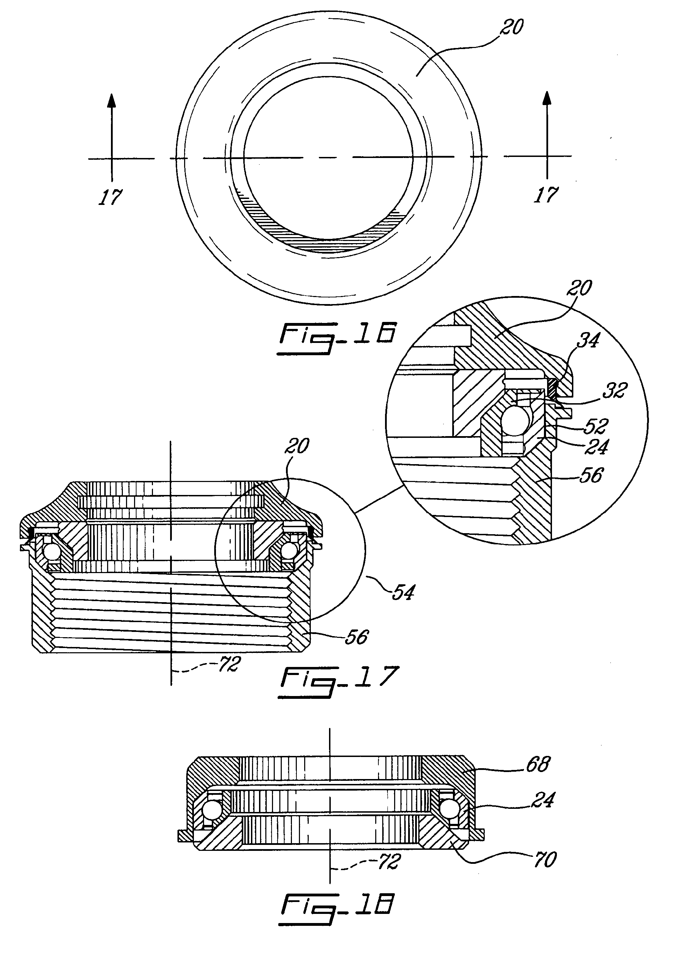

An alternate embodiment is now described with reference made to Figures 16 to 20. The alternate embodiment allows the complete removal of the bearing holder 60 to dispose the upper bearing 24 directly on the insert 56 while allowing a full height adjustment capability with the bearing holder 60.

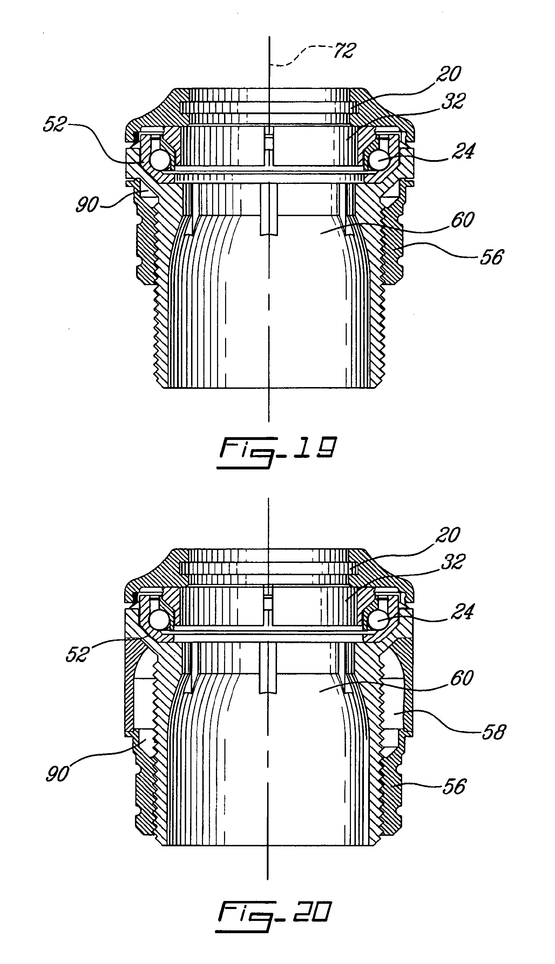

For achieving full height adjustment capability with the bearing holder 60 two different sizes of bearing 24 are used in the current embodiment. A first bearing size having, for example, 1.125" I.D. and 1.375" O.D. and is used in conjunction with the insert 56, as shown in Figure 17, and a second bearing size, for example 1.250" I.D. and 1.500" O.D. is used in conjunction with the bearing holder 60 as illustrated in Figures 19 and 20. The two distinct bearing sizes are used to permit the insert 56 to receive the bearing holder 60 therein while the bearing holder 60 can be positioned almost as if only one bearing 24 was directly supported by the insert 56. This mechanical arrangement provides maximum adjustment with the bearing holder 60 and minimum weight when a single bearing 24 is used with the insert 56. Alternatively, two bearings of the same size could be used in a similar mechanical arrangement.

Figure 16 through Figure 18 illustrates a mechanical arrangement where the bearing 24 rests directly on the insert 56 so that the bearing is at its closest position from the head tube 12. Figure 18 illustrates the same cooperating lower headset 54 as previously depicted in Figure 9.

In contrast with preceding Figures 16 to 18, Figure 19 and Figure 20 depict the assembly including the intervening bearing holder 60. The lower bearing position is illustrated in Figure 19. A higher bearing position is shown in Figure 20 where a spacer 58 is secured between the bearing holder 60 and the insert 56.

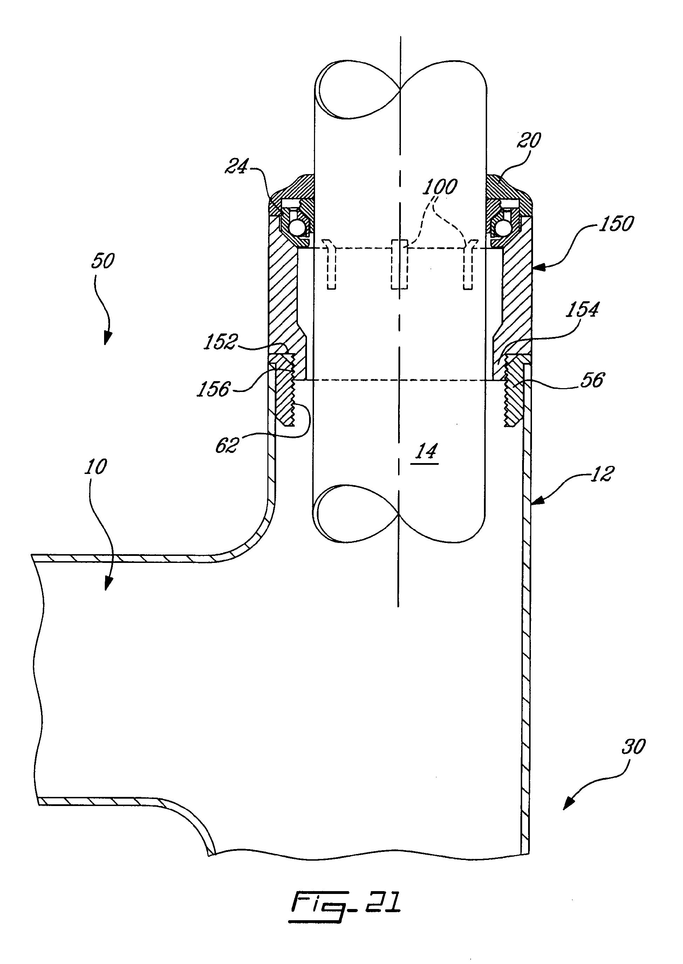

Now referring to Figure 21, there is shown a variant of the headset assembly of Figures 7 to 9. More particularly, in the embodiment of Figure 20, the spacer 58 and bearing holder 60 of Figure 7 have been combined into a single component, namely by bearing holder 150. The bearing holder 150 supports at an upper end thereof the bearing 24 and sits at 152 atop the insert 56 that is glued or otherwise mounted to the head tube 12. The bearing holder 150 includes a downwardly projecting inner sleeve 154 that defines threads 156 on an outer surface thereof so that the bearing holder 150 can be threadably secured to the insert 56 via the internal threads 62 of the insert 56. Alternatively, the outer threads 156 of the bearing holder 150 could directly engaged inner threads defined on an inside surface of the head tube 12, wherein there is no insert 56 used in this arrangement.

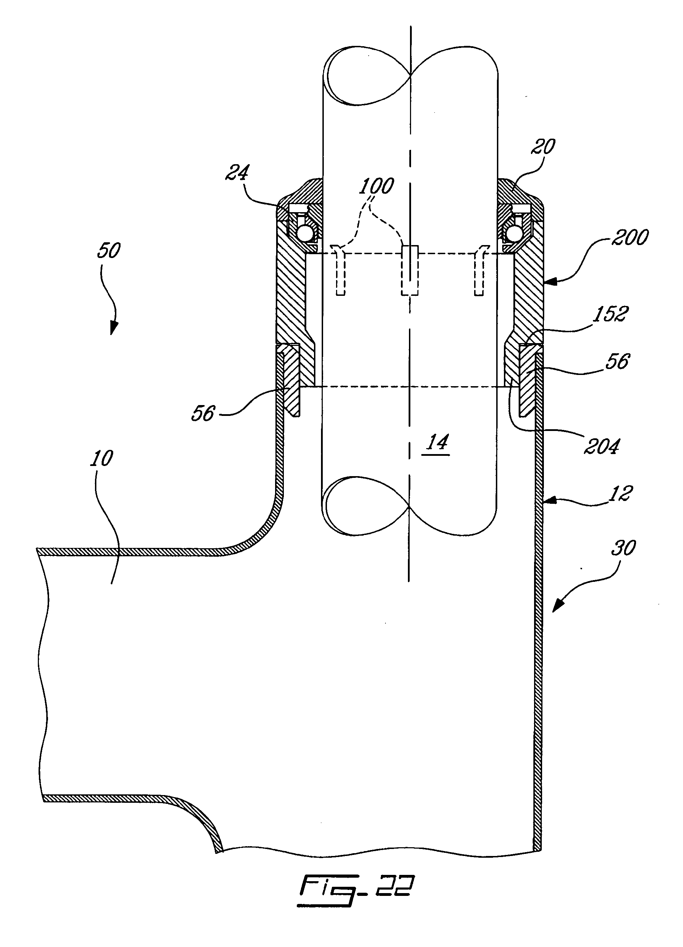

The headset assembly variant of Figure 22 is similar to that of Figure 21, in that the spacer 58 and bearing holder 60 of Figure 7 are combined into a single component, namely a bearing holder 200. The bearing holder 200 supports at an upper end thereof the bearing 24 and sits at 152 atop the insert 56 that is glued or otherwise mounted to the head tube 12. As opposed to the headset assembly 150 of Figure 21, a downwardly projecting inner sleeve 204 of the bearing holder 200 of Figure 22 is smooth on its outer surface (i.e. it does not include outer threads). Similarly, the inner surface of the insert 56 is also smooth. The bearing holder 200 and the insert 56 are configured and sized such that the former is mounted in a press-fit manner to the latter at the level of the outer surface of the inner sleeve 204 of the bearing holder 200 and the inner surface of the insert 56. Alternatively, the projecting inner sleeve 204 of the bearing holder 200 could be directly engaged in a press-fit manner with the inside surface of the head tube 12, wherein there is no insert 56 used in this arrangement. It is noted that the splines 100, although illustrated, are not necessary to mount the bearing holder 200 to the insert 56, as there is no need for a tool to engage the inside of the bearing holder 200 to mount the same to the insert 56 since, during installation, the bearing holder 200 is translationnally introduced in the head tube 12 via force applied on the upper end of the bearing holder 200.

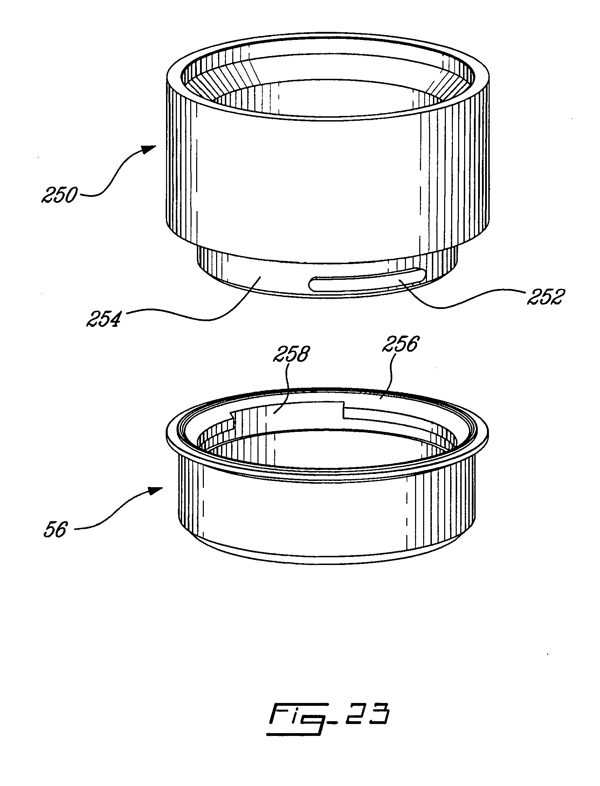

In Figure 23, there is shown a further bearing holder 250 adapted to mate with the insert 56. As in figures 21 and 22, the spacer 58 and bearing holder 60 of Figure 7 are combined into a single component, namely the bearing holder 250. The rest (not illustrated) of the headset assembly that comprises the bearing holder 250 and the insert 56 of Figure 23 is similar to that of Figures 21 and 22. In Figure 23, the bearing holder 250 is secured to the insert 56 via a bayonet system. More particularly, the downwardly projecting inner sleeve 254 of the bearing holder 250 includes one or more elongated bosses 252 (typically a pair of such diametrically opposed bosses) that protrude outwardly from the projecting inner sleeve 254. The insert 56 includes an inwardly projecting flange 256 that defines a pair of cut-outs 258 to allow the bosses 252 of the bearing holder 250 to be lowered under the flange 256, after which the bearing holder 250 is rotated so that the bosses 252 thereof are trapped under the flange 254 thereby securely mounting the bearing holder 250 to the insert 56. As in previous embodiments, the insert 56 is itself mounted, at its outer surface, to the head tube 12. Alternatively, the inwardly projecting flange 256 and its cut-outs 258 could be provided on the inside of the head tube 12, wherein there is no insert 56 used in this arrangement. It is noted that no splines are necessary on the inside of the bearing holder 250 in order to be able to mount the bearing holder 250 to the insert 56, as there is no need for a tool to engage the inside of the bearing holder 250 to mount the same to the insert 56.

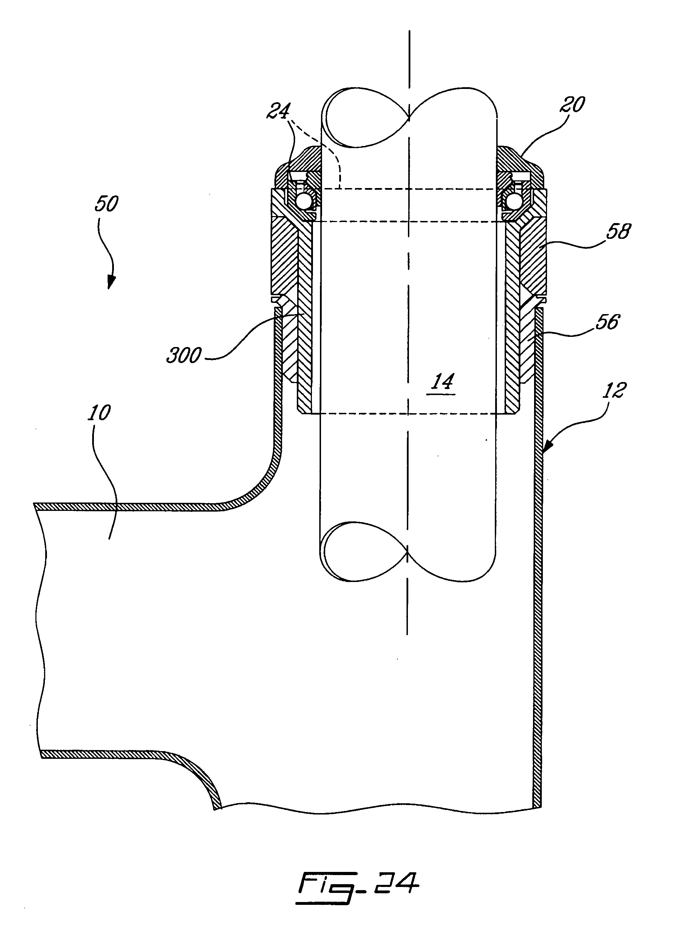

The headset assembly of Figure 24 is similar to that of Figure 7, wherein the spacer and bearing holder are separate components. In Figure 24, a lower end of the bearing holder 300 is press-fitted into engagement with the insert 56 (in a way similar to the headset assembly of Figure 22). Alternatively, the lower end of the bearing holder 300 can be directly engaged in a press-fit manner with the inside surface of the head tube 12, wherein there is no insert 56 used in this arrangement.

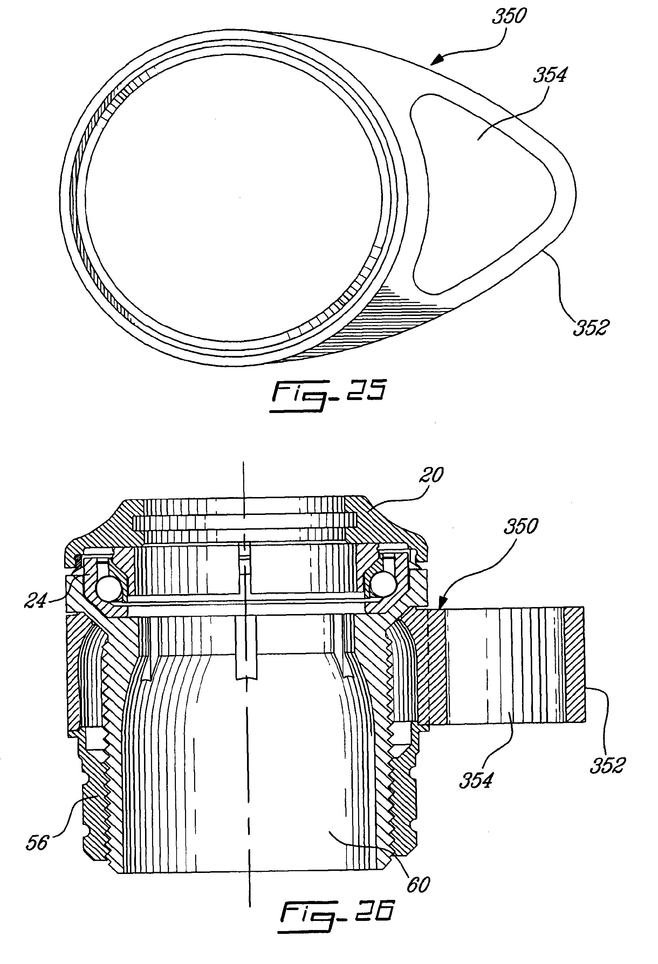

Figure 25 shows an aerodynamic spacer 350, for instance shaped as a water drop, as herein illustrated. This spacer 350 can be used, for instance, wit the headset of Figure 20, as seen in Figure 26. The spacer 350 defines a front aerodynamic profile 352, herein defining a central cavity 354. Alternatively, such an aerodynamic profile could also be embodied in a component that combines a bearing holder and a spacer (such as the bearing holders of Figures 21 to 23).

Although the present invention has been described hereinabove by way of non-restrictive, illustrative embodiments thereof, these embodiments can be modified at will, within the scope of the appended claims.

## Claims

1. A bicycle headset (54, 55) upper bearing holder (60) comprising:
a hollowed cylindrical body comprising a first side (52) adapted to receive a bearing (24), and a second side (64), opposed to the first side, adapted to be removeably secured to a head tube (12), the bearing holder being adapted to support the bearing for reducing friction between a fork tube (14) and the head tube when the bearing holder is used in conjunction with a bicycle (10), wherein the second side of the hollowed cylindrical body comprises an attachment mechanism adapted to removeably secure the hollowed cylindrical body to the head tube and axially position the hollowed cylindrical body about the head tube, **characterized in that**:
the bicycle headset upper bearing holder further comprises a spacer (58) adapted to set a distance between the bearing and the head tube.

2. The bicycle headset upper bearing holder of claim 1, wherein the attachment member is a threaded member.

3. The bicycle headset upper bearing holder of claim 2, wherein the threaded member is a male threaded member.

4. The bicycle headset upper bearing holder of claim 2, wherein the threaded member is adapted to be locked with "loc tite".

5. The bicycle headset upper bearing holder of claim 1, wherein the spacer comprises a mating area adapted to position the spacer about the bearing holder.

6. The bicycle headset upper bearing holder of claim 1, wherein threaded member is adapted to mate with a corresponding threaded member disposed on the head tube.

7. The bicycle headset upper bearing holder of claim 1, wherein the upper bearing headset is installed on a bicycle, in particular wherein the upper bearing holder is made of aluminium.

8. A method of securing an upper bearing (24) on a bicycle headset (54, 55), the method comprising:
releasably securing an upper bearing holder (60) about a bicycle head tube (12), the upper bearing holder having a hollowed central portion defining an axis (94), the bicycle head tube having a hollowed central portion defining a headset axis, the axis of the bearing holder being coaxial with the headset axis, **characterized in that** the method further comprises:
determining a distance between the upper bearing and the bicycle head tube;
selecting a spacer (58) in accordance with the distance; and
installing the spacer between the upper bearing holder and the bicycle head tube;
wherein securing the upper bearing holder comprises engaging the upper bearing holder to the bicycle head tube.

9. The method of claim 8, comprising threadably engaging the upper bearing holder to the bicycle head tube.

10. The method of claim 8, comprising installing an insert to the bicycle head tube.

11. The method of claim 10, wherein the insert provides a threaded portion about which the upper bearing holder is threadably engageable.

12. The method of claim 11, comprising superposing a cap over to and coaxial with the upper bearing holder.

## Patentansprüche

1. Oberer Lagerträger (60) für einen Fahrradsteuersatz (54, 55), mit:
einem gehöhlten zylindrischen Körper mit einer ersten Seite (52), die angepasst ist, um ein Lager (24) aufzunehmen, und einer zweiten Seite (64) entgegengesetzt zu der ersten Seite, die angepasst ist, um an einem Steuerschaft (12) abnehmbar gesichert zu sein, wobei der Lagerträger angepasst ist, um das Lager zur Verringerung von Reibung zwischen einem Gabelschaft (14) und dem Steuerschaft zu stützen, wenn der Lagerträger in Verbindung mit einem Fahrrad (10) verwendet wird, wobei die zweite Seite des gehöhlten zylindrischen Körpers einen Anbringmechanismus aufweist, der angepasst ist, um den gehöhlten zylindrischen Körper an dem Steuerschaft abnehmbar zu sichern und den gehöhlten zylindrischen Körper axial über dem Steuerschaft zu positionieren, **dadurch gekennzeichnet, dass**:
der obere Lagerträger für einen Fahrradsteuersatz ferner einen Abstandshalter (58) aufweist, der angepasst ist, um einen Abstand zwischen dem Lager und dem Steuerschaft festzusetzen.

2. Oberer Lagerträger für einen Fahrradsteuersatz nach Anspruch 1, wobei das Anbringbauteil ein mit einem Gewinde versehenes Bauteil ist.

3. Oberer Lagerträger für einen Fahrradsteuersatz nach Anspruch 2, wobei das mit einem Gewinde versehene Bauteil ein mit einem Außengewinde versehenes Bauteil ist.

4. Oberer Lagerträger für einen Fahrradsteuersatz nach Anspruch 2, wobei das mit einem Gewinde versehene Bauteil angepasst ist, um mit "Loctite" fixiert zu werden.

5. Oberer Lagerträger für einen Fahrradsteuersatz nach Anspruch 1, wobei der Abstandshalter einen Steckbereich aufweist, der angepasst ist, um den Abstandshalter über dem Lagerhalter zu positionieren.

6. Oberer Lagerträger für einen Fahrradsteuersatz nach Anspruch 1, wobei das mit einem Gewinde versehene Bauteil angepasst ist, um mit einem entsprechenden, mit einem Gewinde versehenen Bauteil in Eingriff zu gehen, das an dem Steuerschaft angebracht ist.

7. Oberer Lagerträger für einen Fahrradsteuersatz nach Anspruch 1, wobei der Steuersatz mit oberem Lager an einem Fahrrad montiert ist, insbesondere wobei der obere Lagerträger aus Aluminum besteht.

8. Verfahren zum Sichern eines oberen Lagers (24) an einem Fahrradsteuersatz (54, 55), wobei das Verfahren die folgenden Schritte aufweist:
Lösbares Sichern eines oberen Lagerträgers (60) über einem Fahrradsteuerschaft (12), wobei der obere Lagerträger einen gehöhlten mittleren Abschnitt hat, der eine Achse (94) definiert, wobei der Fahrradsteuerschaft einen gehöhlten mittleren Abschnitt aufweist, der eine Steuersatzachse definiert, wobei die Achse des Lagerhalters koaxial zu der Steuersatzachse ist, **dadurch gekennzeichnet, dass** das Verfahren ferner die folgenden Schritte aufweist:
Bestimmen eines Abstands zwischen dem oberen Lager und dem Fahrradsteuerschaft;
Auswählen eines Abstandshalters (58) in Übereinstimmung mit dem Abstand; und
Montieren des Abstandshalters zwischen dem oberen Lagerhalter und dem Fahrradsteuerschaft;
wobei das Sichern des oberen Lagerhalters ein Eingreifen des oberen Lagerhalters mit dem Fahrradsteuerschaft umfasst.

9. Verfahren nach Anspruch 8, umfassend ein schraubbares Eingreifen des oberen Lagerhalters mit dem Fahrradsteuerschaft.

10. Verfahren nach Anspruch 8, umfassend ein Montieren eines Einsatzes an dem Fahrradsteuerschaft.

11. Verfahren nach Anspruch 10, wobei der Einsatz einen mit einem Gewinde versehenen Abschnitt bereitstellt, über den der obere Lagerhalter schraubbar in Eingriff gebracht werden kann.

12. Verfahren nach Anspruch 11, umfassend ein Überlagern einer Kappe über und koaxial zu dem oberen Lagerhalter.

## Revendications

1. Support de roulement supérieur (60) de jeu de direction de bicyclette (54, 55), comprenant :
un corps cylindrique creusé comprenant un premier côté (52) adapté pour recevoir un roulement (24), et un second côté (64), opposé au premier côté, adapté pour être fixé de façon amovible à un tube de direction (12), le support de roulement étant adapté pour supporter le roulement pour réduire le frottement entre un tube de fourche (14) et le tube de direction lorsque le support de roulement est utilisé conjointement avec une bicyclette (10), dans lequel le second côté du corps cylindrique creusé comprend un mécanisme de raccordement adapté pour fixer de façon amovible le corps cylindrique creusé au tube de direction et positionner axialement le corps cylindrique creusé autour du tube de direction, **caractérisé en ce que** :
le support de roulement de jeu de direction comprend en outre une entretoise (58) adaptée pour régler une distance entre le roulement et le tube de direction.

2. Support de roulement de jeu de direction selon la revendication **1,** dans lequel l'élément de raccordement est un élément fileté.

3. Support de roulement de jeu de direction selon la revendication **2,** dans lequel l'élément fileté est un élément fileté mâle.

4. Support de roulement de jeu de direction selon la revendication **2,** dans lequel l'élément fileté est adapté pour être verrouillé avec « loc tite ».

5. Support de roulement de jeu de direction selon la revendication **1,** dans lequel l'entretoise comprend une zone d'accouplement adaptée pour positionner l'entretoise autour du support de roulement.

6. Support de roulement de jeu de direction selon la revendication **1,** dans lequel l'élément fileté est adapté pour s'accoupler avec un élément fileté correspondant disposé sur le tube de direction.

7. Support de roulement de jeu de direction selon la revendication **1,** dans lequel le jeu de direction à roulement supérieur est installé sur une bicyclette, en particulier dans lequel le support de roulement supérieur est fait d'aluminium.

8. Procédé de fixation d'un roulement supérieur (24) sur un jeu de direction de bicyclette (54, 55), le procédé comprenant :
la fixation amovible d'un support de roulement supérieur (60) autour d'un tube de direction (12) de bicyclette, le support de roulement supérieur comportant une partie centrale creusée définissant un axe (94), le tube de direction de bicyclette comportant une partie centrale creusée définissant un axe de jeu de direction, l'axe du support de roulement étant coaxial avec l'axe de jeu de direction, **caractérisé en ce que** le procédé comprend en outre :
la détermination d'une distance entre le roulement supérieur et le tube de direction de bicyclette ;
la sélection d'une entretoise (58) conformément à la distance ; et
l'installation de l'entretoise entre le support de roulement supérieur et le tube de direction de bicyclette ;
dans lequel la fixation du support de roulement supérieur comprend la mise en prise du support de roulement supérieur sur le tube de direction de bicyclette.

9. Procédé selon la revendication **8,** comprenant la mise en prise par vissage du support de roulement supérieur sur le tube de direction de bicyclette.

10. Procédé selon la revendication **8,** comprenant l'installation d'un insert sur le tube de direction de bicyclette.

11. Procédé selon la revendication **10,** dans lequel l'insert fournit une partie filetée autour de laquelle le support de roulement supérieur est vissé.

12. Procédé selon la revendication **11,** comprenant la superposition d'une coiffe sur et coaxiale avec le support de roulement supérieur.
